# EUROPÄISCHE PATENTSCHRIFT

(11) **EP 2 552 691 B1**
(45) Veröffentlichungstag und Bekanntmachung des Hinweises auf die Patenterteilung: **26.08.2015**
(21) Anmeldenummer: 11708255.2
(22) Anmeldetag: 15.03.2011
(51) Int. Cl.: B32B 37/26, B32B 37/12, B29C 43/20, B30B 15/34

(54) **VERFAHREN ZUM HERSTELLEN VON INNENVERKLEIDUNGSTEILEN DURCH KASCHIEREN SOWIE INNENVERKLEIDUNGSTEIL**
METHOD FOR PRODUCING INNER CLADDING PARTS BY LAMINATION, AND INNER CLADDING PART
PROCÉDÉ POUR LA FABRICATION DE PIÈCES DE REVÊTEMENT INTÉRIEUR PAR CONTRECOLLAGE AINSI QUE PIÈCE DE REVÊTEMENT INTÉRIEUR

(30) Priorität: 30.03.2010 DE 102010003440
(43) Veröffentlichungstag der Anmeldung: 06.02.2013
(73) Patentinhaber: Lisa Dräxlmaier GmbH, 84137 Vilsbiburg (DE)
(72) Erfinder: AUSSERMEIER, Josef, 84494 Neumarkt-Sankt Veit (DE)
(86) Internationale Anmeldenummer: PCT/EP2011/053845
(87) Internationale Veröffentlichungsnummer: WO 2011/120794

(56) Entgegenhaltungen:
- EP-A2- 1 138 470
- DE-A1- 19 846 402
- DE-A1-102007 007 617
- US-A- 2 407 833

## Beschreibung

Die vorliegende Erfindung betrifft ein Verfahren zur Herstellung von Bauteilen, die im Innenraum von Landfahrzeugen, Wasserfahrzeugen und Luftfahrzeugen zum Einsatz kommen können und insbesondere Bauteilen für den Innenraum von Kraftfahrzeugen. Rein beispielhaft fallen hierunter Verkleidungsteile im Bereich der Türen, Armaturentafeln, Handschuhkästen und Mittelkonsolen. Im Besonderen betrifft die vorliegende Erfindung ein Verfahren zum Herstellen der Bauteile durch Kaschieren einer vorzugsweise flexiblen Materiallage mit einer Oberseite und einer Unterseite auf einen vorzugsweise formstabilen Träger mit einer vorzugsweise dreidimensionalen Oberflächenkontur sowie solche Bauteile.

Zur Herstellung von mit einer flexiblen Materiallage kaschierten Trägern wird im Stand der Technik primär zwischen dem sogenannten Vakuumkaschieren (auch als Folienkaschieren bezeichnet) und dem sogenannten Presskaschieren unterschieden.

Beim Vakuumkaschieren werden in der Regel Kunststofffolien als flexible Materiallage durch Applikation von Vakuum auf Träger kaschiert. Zur Verbindung zwischen dem Träger und der flexiblen Materiallage dient ein auf den Träger und/oder die flexible Materiallage aufgebrachter Klebstoff.

Das Presskaschieren kommt in der Regel bei der Verarbeitung von flexiblen Materiallagen, die entweder nicht vakuumfähig sind, wie beispielsweise Textilien, oder die nicht bzw. nur bedingt dehnbar sind, wie beispielsweise Leder oder Kunstleder, zum Einsatz. Hierbei werden der Träger und die flexible Materiallage, die in das Werkzeug eingelegt sind, in einem vordefinierten Pressspalt verpresst bzw. gefügt. Auch bei diesem Verfahren wird die Verbindung der Elemente durch auf den Träger und/oder die flexible Materiallage aufgetragenen Klebstoff erzielt.

Vielfach kommt zur Verbindung der zwei Elemente ein thermisch aktivierbarer Klebstoff zum Einsatz, der vorab auf eines oder beide Elemente aufgetragen wurde. Dieser Klebstoff muss vor bzw. während des Kaschierens aktiviert werden.

Dies kann durch Heizen der Kaschierwerkzeuge bzw. deren Formhälften erfolgen, so dass der Klebstoff in der Fuge zwischen dem Träger und der flexiblen Materiallage durch Kontakt des Trägers und der flexiblen Materiallage mit der beheizten Form aktiviert wird. Dabei erfolgt die Erwärmung über eine gleichzeitige Erwärmung des Trägers und der flexiblen Materiallage. Es ist jedoch zu berücksichtigen, dass insbesondere bei der Verwendung empfindlicher Materialien nicht beliebig hohe Temperaturen über die Formhälften appliziert werden können.

Alternativ ist es bekannt, die Klebstoffschicht vor dem Zusammenbringen von Träger und flexibler Materiallage, z. B. über Heißluft oder Infrarot zu erwärmen.

Gegebenenfalls kann es ferner aufgrund einer geringen Anfangshaftung zwischen den Elementen notwendig sein, die Fugentemperatur in der Fuge zwischen der flexiblen Materiallage und dem Träger durch Kühlen eines oder beider Werkzeuge schnell wieder zu reduzieren.

Die oben genannten Verfahren haben den Nachteil eines hohen Energieaufwands, da der formstabile Träger und die flexible Materiallage beim Aktivieren des Klebstoffs mitgeheizt werden. Ferner führen die Verfahren zu relativ hohen Taktzeiten, da die Wärme an der Oberseite der flexiblen Materiallage, insbesondere bei der Verwendung von Echtleder nicht mehr als 85°C betragen darf. Darüber hinaus muss die Klebefuge bei manchen Verfahren wieder gekühlt werden, um Ablösungen zu vermeiden.

Als weiterer Stand der Technik ist die EP 1 138 470 A2 bekannt, die ein Formträgerteil mit integriertem Heizelement und ein Verfahren zur Herstellung desselben betrifft. Bei dem bekannten Verfahren wird zumindest ein flächiges, dreidimensional verformbares Heizelement im Hohlraum eines Formpresswerkzeugs an eine Wandung des Hohlraums angrenzend positioniert. Dann wird eine Kunststoffmatrix in den Formhohlraum eingebracht, und die Kunststoffmatrix im Formpresswerkzeug zu einem Formträgerteil verpresst und ausgehärtet. Die Kunststoffmatrix stellt dabei eine Haftverbindung zwischen der Oberfläche des Formträgerteils und dem Heizelement her. Die Erfindung betrifft ferner ein Formträgerteil mit einem darauf befindlichen flächigen Heizelement.

Die Aufgabe der vorliegenden Erfindung liegt demnach darin, ein Verfahren der eingangs genannten Art zu schaffen, das bei geringeren Taktzeiten und geringem Energieaufwand prozesssicher durchführbar ist. Eine weitere Aufgabe der vorliegenden Erfindung besteht darin, ein Innenverkleidungsteil für Fahrzeuge zu schaffen, das bei geringeren Taktzeiten und niedrigerem Energieaufwand prozesssicher herstellbar ist.

Die obige Aufgabe wird durch ein Verfahren mit den Merkmalen des Anspruchs 1 sowie ein Innenverkleidungsteil mit den Merkmalen des Anspruchs 6 gelöst. Alternativ kann die vorliegende Erfindung auch in einem Verfahren gemäß Anspruch 11 umgesetzt werden.

Der vorliegenden Erfindung liegt der Gedanke zu Grunde, den Klebstoff unmittelbar in der Fuge zwischen dem formstabilen Träger und der flexiblen Materiallage, d. h. zwischen Oberflächenkontur des formstabilen Trägers und Unterseite der flexiblen Materiallage zu aktivieren. Durch die direkte Einbringung der Wärme in die Fuge lässt sich die aufzuwendende Energie sehr effizient nutzen, da nur der Klebstoff direkt beheizt wird und nicht wie bei derzeitigen Verfahren der formstabile Träger bzw. die flexible Materiallage mitgeheizt werden. Auch lassen sich sehr kurze Taktzeiten verwirklichen, indem Carbon-Nanotubes mit einem sehr direkten Ansprechverhalten als Heizeinrichtung verwendet werden.

Dementsprechend schlägt die vorliegende Erfindung ein Verfahren zum Herstellen eines Innenverkleidungsteils für Fahrzeuge durch Kaschieren einer vorzugsweise flexiblen Materiallage auf einen vorzugsweise formstabilen Träger vor.

Die flexible Materiallage weist eine Oberseite und eine Unterseite auf. Die beiden Seiten können gleich gestaltet sein. Alternativ kann die flexible Materiallage eine Gut- und eine Schlechtseite aufweisen, wobei die Gutseite die Oberseite und die Schlechtseite die Unterseite ist. Letzteres ist insbesondere bei der Kaschierung von Dekormaterialien auf einen formstabilen Träger der Fall, bei denen die Oberseite im späteren Bauteil eine Sichtseite bildet, die im Endprodukt, z. B. dem verbauten Verkleidungsteil im Kraftfahrzeug, von einem Betrachter wahrnehmbar ist. Der formstabile Träger ist meist aus Kunststoff, insbesondere Spritzguss. Er kann eine dreidimensionale Oberflächenkontur aufweisen. Das bedeutet, dass seine Oberfläche, die später die flexible Materiallage trägt, nicht in einer Ebene liegt, sondern eine dreidimensional gekrümmte Fläche ist. Bei der flexiblen Materiallage kann es sich um eine Dekorschicht aus z. B. Leder, Echtleder, künstliches Leder, nicht transparente Kunststofffolien, Textile, Vliese, Gewirke, Holzfurniere oder eine Steinschicht handeln. Auch kann es sich bei der flexiblen Materiallage um eine Zwischenschicht, z. B. Haptikschicht in Form einer Abstandsschicht, z. B. eines Abstandsgewirkes handeln. Es versteht sich jedoch, dass die vorliegende Erfindung auch auf die Verbindung beliebiger Elemente miteinander anwendbar ist, z. B. zwei flexibler Materialien oder zwei formstabiler Materialien. Darüber hinaus muss das fertige Innenverkleidungsteil keine dreidimensionale Oberflächekontur aufweisen, sondern kann auch eben bzw. planar in einer Ebene liegend gestaltet sein. Das Verfahren umfasst die Schritte des Bereitstellens des formstabilen Trägers sowie das Auflegen der Unterseite der flexiblen Materiallage auf die Oberflächenkontur des formstabilen Trägers. Vorab wird in einem separaten Verfahrensschritt auf der Unterseite der flexiblen Materiallage und/oder der Oberflächenkontur des formstabilen Trägers ein thermisch aktivierbarer Klebstoff aufgetragen. Hierzu können beliebige bekannte Verfahren wie beispielsweise ein Sprühauftrag zum Einsatz kommen. Bei dem thermisch aktivierbaren Klebstoff kann es sich um einen Hot-Melt oder einen thermisch aktivierbaren Dispersionsklebstoff handeln. Zur Aktivierung des Klebstoffes schlägt die vorliegende Erfindung die Verwendung von Carbon-Nanotubes als Heizeinrichtung vor, die zumindest in einem Teilbereich mit dem Klebstoff in Kontakt stehen. Hierzu muss eine elektrische Kontaktierung der durch die Carbon-Nanotubes gebildeten Heizfläche hergestellt werden, um eine Spannung anlegen zu können. Durch Anlegen der Spannung erwärmen sich die Carbon-Nanotubes, die als Ohmscher Widerstand der Heizeinrichtung fungieren und erwärmen in dem Teilbereich den Klebstoff, wodurch dieser aktiviert wird. Die elektrische Kontaktierung kann gegebenenfalls durch mit eingelegte Kupferstreifen (Kupferfolie) oder Kontaktzangen, die in Randbereichen des formstabilen Trägers angreifen, realisiert werden.

Des Weiteren umfasst das erfindungsgemäße Verfahren das Zusammendrücken der flexiblen Materiallage und des formstabilen Trägers. Dies kann nach und/oder während der Aktivierung des Klebstoffs erfolgen. Bevorzugterweise erfolgt das Zusammendrücken jedoch vor der Aktivierung, so dass die flexible Materiallage und der Träger bereits lagegenau fixiert sind, ohne dass sie sich noch relativ zueinander verschieben können. Durch die erfindungsgemäße Ausgestaltung wird ein Verfahren geschaffen, das mit niedrigen Taktzeiten prozesssicher durchgeführt werden kann.

Ein weiterer Vorteil der Verwendung von Carbon-Nanotubes besteht darin, dass eine Spannung in einem relativ niedrigen Bereich zur Aktivierung bei niedrigen Taktzeiten ausreichend ist. Derart niedrige Spannungen sind aus Sicht der Arbeitsplatzsicherheit vorteilhaft und bedürfen keiner besonderer Sicherheitsvorbereitungen.

Bei der vorliegenden Erfindung kann entweder der Klebstoff im gesamten Bereich der Oberflächenkontur des formstabilen Trägers durch Anlegen der Spannung an die Carbon-Nanotubes erwärmt und aktiviert werden, um die flexible Materiallage an der Oberflächenkontur zu befestigen. Dabei ist unter "im gesamten Bereich" zu verstehen, dass der Klebstoff in wenigstens dem gesamten Bereich erwärmt wird, in dem eine Verbindung zwischen formstabilen Träger und flexibler Materiallage in einem Arbeitsgang herzustellen ist. Randbereiche am Umfang des Trägers können hier ausgenommen sein.

Alternativ kann das erfindungsgemäße Verfahren auch zur Vorfixierung der flexiblen Materiallage an dem formstabilen Träger genutzt werden. Insbesondere bei der Verwendung flexibler Materiallagen in Form eines Nähkleids, bei der die flexible Materiallage aus wenigstens zwei miteinander entlang einer Naht verbundenen Teilen besteht, ist es vorteilhaft, nur den Bereich des Klebstoffs zu aktivieren, in dem die Naht vorfixiert wird. Mit anderen Worten wird in diesem Fall gemäß einer bevorzugten Ausführungsform zumindest zunächst nur der Klebstoff im Bereich der Oberflächenkontur des formstabilen Trägers aktiviert, indem die Naht der flexiblen Materiallage zu platzieren, d. h. vorzufixieren ist. Die Aktivierung des Teilbereichs kann durch ein gesteuertes Anlegen der Spannung in den einzelnen Teilbereichen, z. B. an den beiden Enden entlang des dem Nahtverlauf entsprechenden Abschnitts auf dem formstabilen Träger erfolgen. Auch dieses gesteuerte Anlegen kann durch entsprechendes Vorsehen von Kontaktstreifen oder durch Befestigen von Kontaktzangen realisiert werden. Im Anschluss kann der übrige Klebstoff anderweitig aktiviert werden oder aber bevorzugterweise auf die gleiche Art und Weise, wobei die Spannung nicht nur an dem Teilbereich, sondern über den gesamten Bereich der Oberflächenkontur angelegt wird, wie es oben erläutert wurde.

Um keinen zusätzlichen Verfahrenschritt erforderlich zu machen, um die Carbon-Nanotubes in Kontakt mit dem Klebstoff zu bringen, kann es bevorzugt sein, die Carbon-Nanotubes in dem Klebstoff zu lösen oder zu dispergieren, bevor dieser auf die Oberflächenkontur des formstabilen Trägers und/oder die Unterseite der flexiblen Materiallage aufgebracht wird. Bei dieser Ausführungsform wird damit keine zusätzliche Schicht im Vergleich zum bisherigen Bauteil erforderlich und zusätzliche Verfahrensschritte können eingespart werden.

Alternativ ist es jedoch auch denkbar, die Carbon-Nanotubes separat vom Klebstoff und vor dem Aufbringen des Klebstoffs auf die Oberflächenkontur des formstabilen Trägers und/oder die Unterseite der flexiblen Materiallage aufzubringen. Dies kann rein beispielhaft durch eine Beschichtung erfolgen.
Z. B. ist von der Firma FutureCarbon GmbH, Deutschland ein Heizlack auf Acrylatbasis mit der Bezeichnung Carbo e-Therm LT bekannt, der zu diesem Zweck geeignet ist.

Des Weiteren schlägt die vorliegende Erfindung auch ein Innenverkleidungsteil für Fahrzeuge vor, das durch das oben erwähnte Verfahren herstellbar bzw. hergestellt ist.

Besonders vorteilhaft hat sich hierbei die Doppelfunktion der Heizeinrichtung aus Carbon-Nanotubes herauskristallisiert. Diese kann im hergestellten Innenverkleidungsteil als Ohmscher Widerstand einer Flächenheizung dienen. Wird das Innenverkleidungsteil beispielsweise im Bereich der Armaturentafel, Mittelkonsole oder Türinnenverkleidung oder aber im Bereich des Dachhimmels verwendet, können ausreichende Flächen für eine Flächenheizung in einem Kraftfahrzeug geschaffen werden, so dass die Heizeinrichtung aus Carbon-Nanotubes, die im Kaschierverfahren genutzt wird, auch im späteren Innenverkleidungsteil noch einen Nutzen hat. D. h. die vorliegende Erfindung betrifft gleichfalls die Verwendung der Heizeinrichtung aus Carbon-Nanotubes in einem Innenverkleidungsteil für Fahrzeuge, das durch das Verfahren, wie es oben beschrieben wurde, hergestellt ist, als Ohmscher Widerstand einer Flächenheizung.

Alternativ ist es auch denkbar, die Carbon-Nanotubes als Stromquelle eines Funktionselements oder eines externen elektrischen/elektronischen Geräts zu nutzen. So kann bei einer Kontaktierung der durch die Carbon-Nanotubes gebildeten Fläche an zwei beabstandeten Punkten Strom abgenommen werden. Das Potenzial ergibt sich dabei aus dem Abstand der zwei Punkte, an denen die Spannung abgegriffen wird, zueinander. Um das Funktionselement mit Strom zu versorgen, kann dieses z. B. durch entsprechende Kontaktelemente, z. B. Pins in Form von Nadelspitzen durch die flexible Materiallage hindurch mit der Fläche aus Carbon-Nanotubes kontaktiert werden.
Alternativ ist es auch denkbar, eine Stromversorgungsschnittstelle fest mit dem Innenverkleidungsteil zu verbinden, die an den zwei erwähnten Punkten zur Abnahme der Spannung mit der Schicht aus Carbon-Nanotubes verbunden ist. Bei dieser Stromversorgungsschnittstelle kann es sich beispielsweise um eine Buchse oder einen Stecker zur Verbindung mit einem externen elektrischen/elektronischen Gerät, z. B. einem MP3-Spieler, einem Navigationsgerät, einem Mobiltelefon, etc. handeln. Beispielsweise kommen ein USB-Steckplatz oder ein USB-Stecker zum Einsatz. Es sind aber auch andere Stecker- bzw. Buchsengestaltungen denkbar.

Darüber hinaus ist es auch denkbar, mögliche Beleuchtungselemente bzw. Einrichtungen, die als Zierelemente in Innenverkleidungsteile eingearbeitet werden können, über die Fläche aus Carbon-Nanotubes elektrisch mit Strom zu versorgen. So könnten beispielsweise LEDs durch Kontaktieren der LED-Kontakte in einem Abstand zueinander mit der Fläche aus Carbon-Nanotubes mit Strom versorgt werden.

Bei all diesen Ausführungsformen macht sich die vorliegende Erfindung zu Nutze, dass die Spannung, die an der Fläche aus Carbon-Nanotubes anzulegen ist, im Bereich der Bordnetzspannung eines Kraftfahrzeugs von 0 - 12 V liegt, so dass eine problemlose Kontaktierung der Carbon-Nanotubes mit dem Bordnetz realisierbar ist.

Die vorliegende Erfindung wurde oben in Zusammenhang mit der Erwärmung eines thermisch aktivierbaren Klebstoff direkt in der Fuge zwischen den zu verbindenden Bauteilen beschrieben, kann alternativ jedoch auch in einem Verfahren umgesetzt werden, bei dem die Carbon-Nanotubes als Heizeinrichtung auf eine Innenkontur eines Kaschierwerkzeugs aufgebracht sind, die beim Zusammendrücken der flexiblen Materiallage und des formstabilen Trägers mit der Oberseite der flexiblen Materiallage in Kontakt kommt, wobei das Erwärmen des Klebstoffs durch Anlagen einer Spannung an die Carbon-Nanotubes in diesem Fall über die flexible Materiallage erfolgt. Dies hat im Vergleich zum Stand der Technik den Vorteil, dass das Werkzeug nicht mit komplizierten Kanälen ausgestaltet werden muss und damit kostengünstig ist. Ferner kann unmittelbar nach Erreichen der Heiztemperatur die Formhälfte gekühlt werden, um die Taktzeiten auch bei dieser Ausführungsform gering zu halten.

Weitere Merkmale und Vorteile der vorliegenden Erfindung, die alleinstehend oder in Kombination mit einem oder mehreren der oben genannten Merkmale umgesetzt werden können, insofern sich die Merkmale nicht widersprechen, sind aus der folgenden Beschreibung einer bevorzugten Ausführungsform ersichtlicht. Diese Beschreibung erfolgt unter Bezugnahme auf die begleitenden Zeichnungen, in denen:
Figur 1 schematisch einen Teilschnitt eines Presskaschierwerkzeugs zeigt;
Figur 2 einen Teilschnitt eines erfindungsgemäßen Innenverkleidungsteils in einer Explosionsdarstellung zeigt.

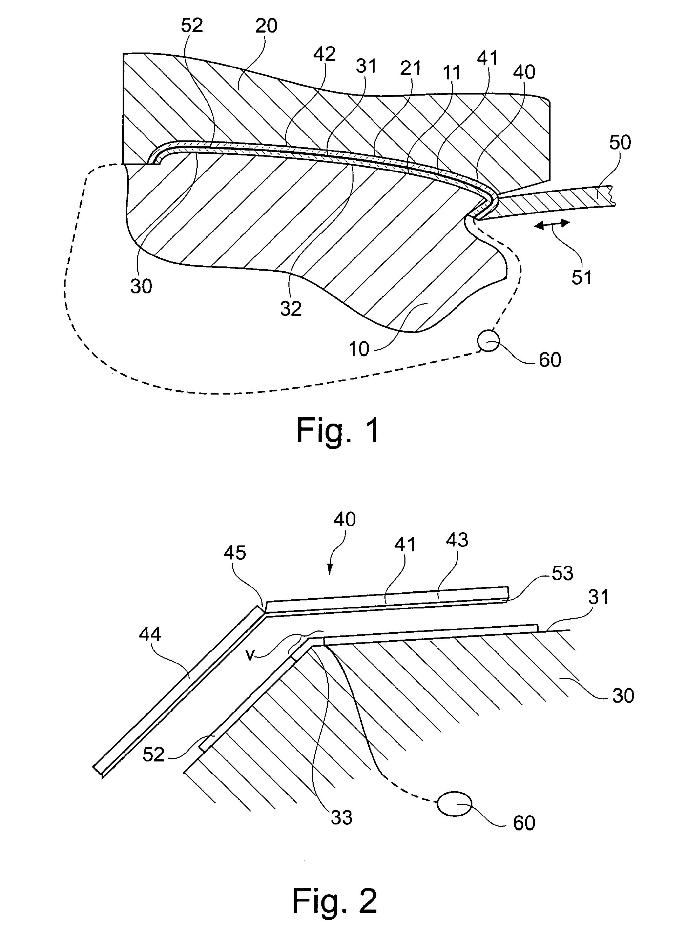

Figur 1 stellt ein Presskaschierwerkzeug dar, mit dem das Verfahren gemäß der vorliegenden Erfindung ausgeführt werden kann. Das dargestellte Presskaschierwerkzeug umfasst ein Unterwerkzeug 10, die untere Werkzeughälfte und ein Oberwerkzeug 20, die obere Werkzeughälfte.

Bei dem Unterwerkzeug 10 kann es sich um eine Werkzeughälfte aus z. B. Aluminium handeln. Die untere Werkzeughälfte 10 ist zur Aufnahme eines formstabilen Trägers 30 ausgestaltet. Gegebenenfalls kann das Unterwerkzeug 10 gekühlt sein, ist jedoch unbeheizt.

Das Oberwerkzeug 20 ist durch eine Werkzeugschale gebildet, die eine formgebende Innenkontur 21 umfasst. Zwischen der Innenkontur 21 und einer Oberfläche bzw. Oberseite 11 des Unterwerkzeugs 10, auf der der Träger 30 mit seiner Rückseite aufliegt, wird ein definierter Pressspalt gebildet. Auch in der Werkzeugschale des Oberwerkzeugs 20 können Kühlkanäle ausgebildet sein. Auch das Oberwerkzeug 20 bzw. dessen Werkzeugschale ist unbeheizt.

Ferner ist ein Umbugschieber 50 vorgesehen, der in Richtung des Doppelpfeils 51 bewegbar ist und gegebenenfalls einen Teil der flexiblen Materiallage 40, die zunächst über den Rand des formstabilen Trägers 30 vorragt, in einem Umbugbereich an diesen andrücken kann.

Der formstabile Träger 30 ist vorzugsweise ein Kunststoffträger und vorzugsweise spritzgegossen. Er weist eine Oberfläche 31 auf. Diese Oberfläche 31 ist beispielsweise dreidimensional gekrümmt, so dass eine dreidimensionale Oberflächenkontur gebildet ist. Die der Oberflächenkontur 31 entgegengesetzte Seite 32 liegt auf der Oberseite 11 des Unterwerkzeugs 10 auf. Ferner ist der formstabile Träger 30 auf dem Unterwerkzeug 10 lagefixiert.

Die flexible Materiallage 40, bei der es sich gemäß der dargestellten Ausführungsform um eine Dekorschicht, vorzugsweise aus Echtleder oder Kunstleder handelt, liegt mit ihrer Unterseite 41 bzw. Rückseite auf der Oberflächenkontur 31 des Trägers 30 auf. Die Oberseite 42 ist der Innenkontur 21 der Werkzeugschale der Oberwerkzeugs 20 zugewandt.

In der Fuge zwischen der Oberflächenkontur 31 und der Unterseite 41 ist ein thermisch aktivierbares Klebemittel 52 vorgesehen. Dieses kann vorab auf die Rückseite bzw. Unterseite 41 der flexiblen Materiallage 40 und/oder die Oberseite 31 bzw. Oberflächenkontur 31 des formstabilen Trägers aufgebracht sein. Hierbei können herkömmliche Auftragsverfahren, wie beispielsweise ein Sprühverfahren zum Einsatz kommen. Bei dem Klebemittel kann es sich um einen Hotmelt oder einen thermisch aktivierbaren Dispersionsklebstoff handeln. Die Aktivierungstemperatur kann in einem Bereich zwischen 50°C und 200°C liegen. Bei einem Hotmelt der zuvor genannten Art liegt sie vorzugsweise bei 70°C. Bei einem Dispersionsklebstoff der vorgenannten Art liegt sie vorzugsweise bei ca. 55°C.

Gemäß einer Ausführungsform der vorliegenden Erfindung ist zwischen der Klebstoffschicht 52 und der Oberflächenkontur 31 des Trägers 30 und/oder der Klebstoffschicht 52 und der Unterseite 41 der flexiblen Materiallage 40 eine Schicht umfassend miteinander in Verbindung stehende Carbon-Nanotubes, die ein Flächengebilde erzeugen, vorgesehen. Die in Figur 1 nicht dargestellte Schicht aus Carbon-Nanotubes kann über entsprechende Kontaktierungen z. B. Kontaktstreifen (z. B. Kupferstreifen) mit einer Stromquelle 60 kontaktiert sein.

Gemäß einer Ausführungsform erfolgt die Kontaktierung dabei an zwei gegenüberliegenden Enden des Flächengebildes (in Figur 1 z. B. linker und rechter Hand oder vorne und hinten). Soll im gesamten Bereich des Flächengebildes aus Carbon-Nanotubes eine Erwärmung stattfinden, so erfolgt die Kontaktierung an den jeweils entgegengesetzten Enden entlang der gesamten Breite an den jeweiligen Enden parallel zueinander (senkrecht zur Blattrichtung in Figur 1 oder in der Breite von links nach rechts). Soll nur ein Teilbereich erwärmt werden, geben die jeweils zwei Kontaktierungspunkte sowie deren Tiefe bzw. Breite den jeweiligen Teilbereich vor. Dies wird weiter unten in Bezug auf Figur 3 näher erläutert.

Beim Anlegen einer Spannung über die Stromquelle 60, beispielsweise einer 12 V Spannung, ggf. auch höher, um schneller die gewünschte Temperatur bzw. höhere Temperaturen zu erreichen, fungieren die miteinander in elektrisch leitender Art in Verbindung stehenden Carbon-Nanotubes als Ohmscher Widerstand und führen zu einer Erwärmung des Flächengebildes. Das Flächengebilde steht dabei in Kontakt mit der Klebstoffschicht 52, so dass der Klebstoff auf die gewünschte Aktivierungstemperatur erwärmt wird. Dabei wird die Wärme direkt in der Fuge, in der die Klebstoffschicht 52 vorhanden ist, zwischen der Oberseite 31 des Trägers 30 und der Unterseite 41 der Materiallage 40 eingebracht. Sobald die Aktivierungstemperatur erreicht ist, kann die Spannung deaktiviert werden und gegebenenfalls eine Kühlung des Unterwerkzeugs 10 und/oder Oberwerkzeugs 20 erfolgen.

Gemäß einer alternativen Ausführungsform ist es bevorzugt, die Carbon-Nanotubes derart in der Klebstoffschicht 52 zu lösen oder zu dispergieren, dass keine zusätzliche Beschichtung mit den Carbon-Nanotubes erforderlich ist. Ansonsten ist die Ausgestaltung gleichermaßen wie oben beschrieben. Letztere Ausführungsform ist in Figur 1 dargestellt.

Im Folgenden wird unter Bezugnahme auf Figur 1 ein Verfahren gemäß einer Ausführungsform der vorliegenden Erfindung erläutert.

In einem ersten Verfahrensschritt werden die Oberfläche 31 des Trägers 30 und/oder die Unterseite 41 der Materiallage 40 mit einer Beschichtung aus Carbon-Nanotubes und anschließend einem Klebemittelauftrag in Form eines thermisch aktivierbaren Klebstoffs versehen. Alternativ und wenn die Carbon-Nanotubes bereits in dem Klebstoff gelöst oder dispergiert sind, reicht lediglich ein solcher Klebstoffauftrag. Anschließend wird die Materiallage 40 auf dem Träger 30 vorfixiert. Daraufhin wird der Träger 30 im Unterwerkzeug 10 fest gelegt. Im Anschluss schließt sich das Oberwerkzeug 20, so dass der zwischen dem Unterwerkzeug 10 und dem Oberwerkzeug 20 vorgesehene Pressspalt realisiert wird. Während des Schließens oder nach dem Schließen wird eine Spannung 60 an dem Flächengebilde aus den Carbon-Nanotubes angelegt, wodurch diese als Ohmscher Widerstand fungieren und eine Heizeinrichtung bilden. Dadurch wird der thermisch aktivierbare Klebstoff 52, in dem die Carbon-Nanotubes dispergiert oder gelöst sind, oder mit dem das Flächengebilde aus dem Carbon-Nanotubes in direktem unmittelbaren Kontakt steht, auf die Aktivierungstemperatur, wie sie oben erwähnt wurde, gebracht. Sobald die Aktivierungstemperatur erreicht ist, kann die Stromquelle 60 deaktiviert werden und gegebenenfalls eine Kühlung der Werkzeughälften 10 und/oder 20 erfolgen, um eine schnelle Abkühlung der Fugentemperatur herbeizuführen. Gleichzeitig kann der Umbugschieber 50 durch Bewegen in Richtung nach links in Figur 1 den über einen Rand des Trägers 30 hervorstehende Teil der flexiblen Materiallage 40 gegen den Träger 30 bzw. dessen Oberseite 31 zu drücken. Hierbei muss keine zusätzliche Erwärmung des Klebstoffs in diesem Bereich erfolgen, da dies gleichfalls über die Heizeinrichtung umfassend die Carbon-Nanotubes erzielt werden kann, insofern eine entsprechende Kontaktierung realisierbar ist. Im Anschluss und nach dem Öffnen der Werkzeughälften 10 und 20 kann das hergestellte Bauteil entnommen werden.

Im Anschluss können die über das Bauteil hervorstehenden Kontaktstreifen entfernt werden. Andererseits ist es bevorzugt, die Kontaktstreifen beizubehalten und nach dem Verbauen in einem Fahrzeug mit dem 12 V Bordnetz zu kontaktieren. Dadurch wird es möglich, das Flächengebilde aus Carbon-Nanotubes, das entweder separat vom Klebstoff 52 oder in diesem gelöst bzw. dispergiert aufgetragen ist auch im fertigen Bauteil zu nutzen. Beispielsweise könnte durch das Anlegen einer Spannung an den Kontaktstreifen im fertigen Bauteil eine Flächenheizung geschaffen werden. Insbesondere bei der Verwendung in großflächigen Interieurbauteilen, wie beispielsweise der Armaturentafel und/oder Türverkleidungen sowie dem Dachhimmel können dadurch große Flächen beheizt werden, die gegebenenfalls eine herkömmliche Heizung in einem Kraftfahrzeug ersetzen können. Jedoch ist es auch bei kleineren Flächen z. B. Lenkrädern, Armauflagen, etc. möglicherweise vorteilhaft diese Flächen zu wärmen, so dass dem Nutzer ein angenehmes warmes Gefühl vermittelt wird. Ein späteres Lösen der Verklebung durch die erneute Erwärmung ist durch die erfolgte chemische Reaktion im Klebstoff ausgeschlossen.

Es versteht sich, dass gegebenenfalls auch mehr als nur zwei Lagen über dieses Verfahren miteinander verbunden werden könnten. Z. B. kann zwischen der Materiallage 14 und dem Träger 30 eine weitere Zwischenschicht in Form einer Haptikschicht z. B. eine Abstandsschicht, vorgesehen sein. Hierbei kommen Abstandsgewirke, Vliesstoffe und ähnliche Schichten in Frage. Auch ist es denkbar, dass die Materiallage 40 bereits aus zwei oder mehr Lagen besteht. Rein beispielhaft sei hier auf Lederplanware verwiesen, bei denen eine Kunstlederschicht mit einer rückseitigen Verstärkungsschicht versehen ist. Die Verstärkungsschicht kann dabei vorzugsweise aus einer Vliesschicht bestehen.

Als alternativer Anwendungsfall des Flächengebildes aus Carbon-Nanotubes ist es auch denkbar, eine Stromversorgung für ein externes Gerät vorzusehen. So ist es denkbar, die Materiallage 40 als Dekorlage auszubilden, die reversibel von Kontaktpins durchdrungen werden kann. Die Kontaktpins, die elektrisch leitend ausgestaltet sein sollten, kommen in einem Abstand zueinander, der das entsprechende Spannungspotenzial vorgibt, mit dem Flächengebilde aus Carbon-Nanotubes in Kontakt bzw. werden damit elektrisch verbunden. Ist dieses mit Strom versorgt, d. h. liegt eine Spannung an, findet eine Stromversorgung über die zwei Pins statt. Diese Stromversorgung kann zur Stromversorgung externer Geräte über z. B. einen Stecker (USB, etc.) erfolgen oder unmittelbar durch "Andocken" des Geräts, das in diesem Fall die entsprechenden Kontaktpins aufweisen muss. Rein beispielhaft seien als solche externen Geräte Navigationssysteme, Mobiltelefone, MP3-Spieler, etc. genannt.

Alternativ ist es auch denkbar, in das Innenverkleidungsteil Beleuchtungselemente zu integrieren, die durch in Kontakt bringen an zwei Punkten mit dem Flächengebilde aus Carbon-Nanotubes und Anbinden der Kontaktstreifen an das Bordnetz mit Strom versorgt werden können. Rein beispielhaft sei hier auf LEDs verwiesen, die z. B. in Kombination mit Lichtleitern zum Einsatz kommen können.

Gemäß einer alternativen Ausführungsform kann die vorliegende Erfindung auch zum Einsatz kommen, um die flexible Materiallage 40 auf dem formstabilen Träger 30 vorzufixieren. Dies ist insbesondere vorteilhaft, wenn die Oberflächenkontur 31 des formstabilen Trägers 30 stark gekrümmt ist und die flexible Materiallage 40 in Form eines Nähkleids vorliegt, bei dem ein erster Teil 43 und ein zweiter Teil 44 entlang einer Naht 45 miteinander verbunden sind (Figur 2).

Hierzu muss die Naht 45 beim Vorfixieren möglichst genau auf dem Knick 33 des Trägers 30, d. h. dem Kontursprung fixiert werden. Gemäß dieser Ausführungsform ist auf der Oberflächenkontur 31 des Trägers eine Klebstoffschicht 52 aus einem thermisch aktivierbaren Klebstoff, wie oben erwähnt, aufgebracht. Zwischen dieser Klebstoffschicht und der Oberflächenkontur 31 kann ein Flächengebilde aus Carbon-Nanotubes, z. B. der oben erwähnte Lack, aufgebracht sein.

Alternativ ist es auch denkbar, wie es oben erläutert wurde, die Carbon-Nanotubes in dem Klebstoff 52 selbst zu lösen oder zu dispergieren. Auf der Unterseite 41 der Materiallage 40 ist ferner ebenfalls ein thermisch aktivierbarer Klebstoff 53 vorgesehen. Dieser kann gegebenenfalls auch entfallen. Zum Vorfixieren wird im Bereich des Kontursprungs 33 an zwei beabstandeten Enden eine Kontaktierung der Carbon-Nanotube-Schicht (hier der Klebstoffschicht 52 mit den Carbon-Nanotubes) entlang einer Breite V angelegt. Die an beabstandeten Enden platzierten zwei Kontaktierungspunkte liegen entlang des Kontursprungs 33 (senkrecht in Figur 2). Durch Anlegen einer Spannung in nur diesem Teilbereich, wie es in Figur 2 durch die Schraffur angedeutet wurde, wird der Klebstoff nur in diesem Teilbereich aktiviert, so dass eine Vorfixierung der Lage 40 in diesem Bereich manuell erfolgen kann.

Im Anschluss kann das Innenverkleidungsteil mit einem herkömmlichen Presskaschierverfahren fertig gestellt werden oder aber bevorzugterweise wird entlang der gesamten Oberflächenkontur 31 eine Aktivierung des Klebstoffs über die Carbon-Nanotubes herbeigeführt, wie es in Bezug auf Figur 1 erläutert wurde.

Es versteht sich, dass die Beschreibung der Ausführungsformen in Figur 1 und 2 nur beispielhaft ist und dass dem Fachmann verschiedenartige Abwandlungen und Modifikationen der vorliegenden Erfindung ersichtlich sind. Beispielsweise wäre es auch denkbar, eine Beschichtung aus Carbon-Nanotubes auf der Innenkontur 21 des Oberwerkzeugs 20 vorzunehmen und die Heizung der Klebstoffschicht 52 in der Fuge zwischen der Materiallage 40 und dem Träger 30 über das Oberwerkzeug 20 bzw. die Beschichtung aus Carbon-Nanotubes vorzusehen. Dabei wäre jedoch eine Beheizung durch die Materiallage 40 notwendig, was gegebenenfalls weniger bevorzugt ist. Auch versteht sich, dass das Flächengebilde aus Carbon-Nanotubes im späteren Bauteil nicht zwingenderweise weiter verwendet werden muss, wenn dies auch Vorteile bietet. Auch ist die vorliegende Erfindung nicht auf die Verwendung der Carbon-Nanotube-Schicht im fertigen Bauteil als Flächenheizung oder Energiequelle beschränkt. Auch andere Anwendungsfälle sind denkbar.

Schließlich wurde die vorliegende Erfindung oben anhand eines Presskaschierverfahrens dargestellt, ist aber zweifelsfrei auch bei einem Vakuumkaschierverfahren umsetzbar. Des Weiteren sind auch andere Kaschierverfahren, bei denen zwei oder mehr Elemente, die vorzugsweise flächig, miteinander zu verbinden sind, denkbar. Daraus ergibt sich bereits, dass die miteinander zu verbindenden Elemente nicht zwangsläufig formstabil und flexibel sein müssen. Vielmehr können auch zwei formstabile Elemente oder zwei flexible Elemente verbunden werden.

## Patentansprüche

1. Verfahren zum Herstellen eines Innenverkleidungsteils für Fahrzeuge durch Kaschieren einer ersten, vorzugsweise flexiblen Materiallage (40) mit einer Oberseite (42) und einer Unterseite (41) auf einen, vorzugsweise formstabilen Träger (30) mit einer, vorzugsweise dreidimensionalen Oberflächenkontur (31), umfassend die Schritte:
Bereitstellen des Trägers (30);
Auflegen der Unterseite (41) der Materiallage (40) auf die Oberflächenkontur (31) des Trägers (30), wobei auf der Unterseite (41) der Materiallage (40) und/oder der Oberflächenkontur (31) des Trägers (30) ein Klebstoff (52) aufgetragen ist,
Erwärmen des Klebstoffs in einem Teilbereich,
Zusammendrücken der Materiallage (40) und des Trägers (30),
**dadurch gekennzeichnet, dass**
Carbon-Nanotubes als Heizeinrichtung zumindest in dem Teilbereich mit dem thermisch aktivierbaren Klebstoff in Kontakt stehen, und
dass das Erwärmen des Klebstoffs im Teilbereich durch Anlegen einer Spannung an die Carbon-Nanotubes erfolgt, wodurch der Klebstoff aktiviert wird.

2. Verfahren nach Anspruch 1, bei dem die Materiallage aus wenigstens zwei (43, 44) miteinander entlang einer Naht (45) verbundenen Teilen besteht, und der Teilbereich zumindest zunächst nur der Bereich (33) der Oberflächenkontur (31) des Trägers (30) ist, in dem die Naht (45) platziert wird.

3. Verfahren nach Anspruch 1 oder 2, bei dem der Klebstoff (52) im Wesentlichen im gesamten Bereich der Oberflächenkontur des Trägers (30) durch Anlegen der Spannung an die Carbon-Nanotubes erwärmt und aktiviert wird.

4. Verfahren nach einem der Ansprüche 1 bis 3, bei dem die Carbon-Nanotubes in dem Klebstoff gelöst oder dispergiert sind.

5. Verfahren nach einem der Ansprüche 1 bis 3, bei dem die Carbon-Nanotubes separat vom Klebstoff und vor dem Aufbringen des Klebstoffs auf die Oberflächenkontur des formstabilen Trägers und/oder die Unterseite der flexiblen Materiallage aufgebracht sind.

6. Innenverkleidungsteil für Fahrzeuge, das durch das Verfahren nach einem der vorstehenden Ansprüche herstellbar ist.

7. Innenverkleidungsteil nach Anspruch 6, wobei die Carbon-Nanotubes als Ohmscher Widerstand einer Flächenheizung dienen.

8. Innenverkleidungsteil nach Anspruch 6, wobei die Carbon-Nanotubes als Stromquelle eines Funktionselements oder eines externen elektrischen/elektronischen Geräts dienen.

9. Innenverkleidungsteil für Fahrzeuge nach Anspruch 8, bei dem das Funktionselement eine Stromversorgungsschnittstelle zur Stromversorgung eines externen elektrischen/elektronischen Geräts ist.

10. Innenverkleidungsteil für Fahrzeuge nach Anspruch 8, bei dem das Funktionselement eine Beleuchtungseinrichtung ist.

11. Verfahren zum Herstellen eines Innenverkleidungsteils für Fahrzeuge durch Kaschieren einer, vorzugsweise flexiblen Materiallage (40) mit einer Oberseite (42) und einer Unterseite (41) auf einen, vorzugsweise formstabilen Träger (30) mit einer, vorzugsweise dreidimensionalen Oberflächenkontur (31), umfassend die Schritte:
Bereitstellen des Trägers (30);
Auflegen der Unterseite (41) der Materiallage (40) auf die Oberflächenkontur (31) des Trägers (30), wobei auf der Unterseite (41) der Materiallage (40) und/oder der Oberflächenkontur (31) des Trägers (30) ein Klebstoff aufgetragen ist,
Erwärmen des Klebstoffs in einem Teilbereich,
Zusammendrücken der Materiallage (40) und des Trägers (30),
**dadurch gekennzeichnet, dass**
Carbon-Nanotubes als Heizeinrichtung auf eine Innenkontur eines Kaschierwerkzeugs aufgebracht sind, die beim Zusammendrücken der Materiallage (40) und des Trägers (30) mit der Oberseite der Materiallage in Kontakt kommt, und
dass das Erwärmen des thermisch aktivierbaren Klebstoffs im Teilbereich durch Anlegen einer Spannung an die Carbon-Nanotubes erfolgt, wodurch der Klebstoff aktiviert wird.

## Claims

1. Method for producing an inner cladding part for vehicles by laminating a first, preferably flexible material layer (40) having a top side (42) and a bottom side (41) onto a preferably dimensionally stable carrier (30) having a preferably three-dimensional surface contour (31), said method comprising the steps of:
providing the carrier (30);
placing the bottom side (41) of the material layer (40) onto the surface contour (31) of the carrier (30), wherein an adhesive (52) has been applied on the bottom side (41) of the material layer (40) and/or on the surface contour (31) of the carrier (30),
heating the adhesive in a subregion,
pressing the material layer (40) and the carrier (30) together,
**characterized in that**
carbon nanotubes are in contact as a heating device at least in the subregion with the thermally activatable adhesive, and
**in that** the adhesive is heated in the subregion by applying a voltage to the carbon nanotubes, as a result of which the adhesive is activated.

2. Method according to Claim 1, wherein the material layer consists of at least two (43, 44) parts connected to one another along a seam (45), and the subregion at least initially is only the region (33) of the surface contour (31) of the carrier (30) in which the seam (45) is positioned.

3. Method according to Claim 1 or 2, wherein the adhesive (52) is heated and activated substantially in the entire region of the surface contour of the carrier (30) by applying the voltage to the carbon nanotubes.

4. Method according to one of Claims 1 to 3, wherein the carbon nanotubes are dissolved or dispersed in the adhesive.

5. Method according to one of Claims 1 to 3, wherein the carbon nanotubes are applied separately from the adhesive and before the adhesive is applied to the surface contour of the dimensionally stable carrier and/or to the bottom side of the flexible material layer.

6. Inner cladding part for vehicles, which can be produced by the method according to one of the preceding claims.

7. Inner cladding part according to Claim 6, wherein the carbon nanotubes serve as an ohmic resistance of a panel heating system.

8. Inner cladding part according to Claim 6, wherein the carbon nanotubes serve as a power source of a functional element or of an external electrical/electronic appliance.

9. Inner cladding part for vehicles according to Claim 8, wherein the functional element is a power supply interface for supplying power to an external electrical/electronic appliance.

10. Inner cladding part for vehicles according to Claim 8, wherein the functional element is a lighting device.

11. Method for producing an inner cladding part for vehicles by laminating a preferably flexible material layer (40) having a top side (42) and a bottom side (41) onto a preferably dimensionally stable carrier (30) having a preferably three-dimensional surface contour (31), said method comprising the steps of:
providing the carrier (30);
placing the bottom side (41) of the material layer (40) onto the surface contour (31) of the carrier (30), wherein an adhesive has been applied on the bottom side (41) of the material layer (40) and/or on the surface contour (31) of the carrier (30),
heating the adhesive in a subregion,
pressing the material layer (40) and the carrier (30) together,
**characterized in that**
carbon nanotubes are applied as a heating device to an inner contour of a laminating tool, said inner contour coming into contact with the top side of the material layer when the material layer (40) and the carrier (30) are being pressed together, and
**in that** the thermally activatable adhesive is heated in the subregion by applying a voltage to the carbon nanotubes, as a result of which the adhesive is activated.

## Revendications

1. Procédé de fabrication d'une pièce d'habillage intérieur pour véhicules par application d'une première couche (40) d'un matériau de préférence flexible, la couche présentant une face supérieure (42) et une face inférieure (41), sur un support (30) de préférence de forme stable et présentant une surface dont le contour (31) est de préférence tridimensionnel, le procédé comportant les étapes qui consistent à :
préparer le support (30),
appliquer la face inférieure (41) de la couche de matière (40) sur le contour de surface (31) du support (30), un adhésif (52) étant appliqué sur la face inférieure (41) de la couche de matière (40) et/ou sur le contour de surface (31) du support (30),
chauffer l'adhésif dans une partie et
repousser la couche de matière (40) sur le support (30),
**caractérisé en ce que**
des nanotubes de carbone utilisés comme dispositifs de chauffage sont en contact avec l'adhésif activable thermiquement au moins dans la partie et
**en ce que** le chauffage de l'adhésif dans la partie est réalisé par application d'une tension sur les nanotubes de carbone, ce qui active l'adhésif.

2. Procédé selon la revendication 1, dans lequel la couche de matière est constituée d'au moins deux parties (43, 44) reliées l'une à l'autre le long d'une couture (45), la partie étant initialement uniquement la partie (33) du contour de surface (31) du support (30) dans laquelle la couture (45) est placée.

3. Procédé selon la revendication 1 ou 2, dans lequel l'adhésif (52) est chauffé et activé essentiellement sur la totalité du contour de surface du support (30), par application de la tension sur les nanotubes de carbone.

4. Procédé selon l'une des revendications 1 à 3, dans lequel les nanotubes de carbone sont dissous ou dispersés dans l'adhésif.

5. Procédé selon l'une des revendications 1 à 3, dans lequel les nanotubes de carbone sont appliqués séparément de l'adhésif et avant l'application de l'adhésif sur le contour de surface du support de forme stable et/ou sur la face inférieure de la couche de matière flexible.

6. Pièce d'habillage intérieur de véhicules fabriquée par application du procédé selon l'une des revendications précédentes.

7. Pièce d'habillage intérieur de véhicules selon la revendication 6, dans laquelle les nanotubes de carbone servent de résistance ohmique d'un chauffage de surface.

8. Pièce d'habillage intérieur de véhicules selon la revendication 6, dans laquelle les nanotubes de carbone servent de source de courant d'un élément fonctionnel ou d'un appareil électrique/électronique externe.

9. Pièce d'habillage intérieur de véhicules selon la revendication 8, dans laquelle l'élément fonctionnel est une interface d'alimentation en courant qui alimente en courant un appareil électrique/électronique externe.

10. Pièce d'habillage intérieur de véhicules selon la revendication 8, dans laquelle lequel l'élément fonctionnel est un dispositif d'éclairage.

11. Procédé de fabrication d'une pièce d'habillage intérieur pour véhicules par application d'une première couche (40) d'un matériau de préférence flexible, la couche présentant une face supérieure (42) et une face inférieure (41), sur un support (30) de préférence de forme stable et présentant une surface dont le contour (31) est de préférence tridimensionnel, le procédé comportant les étapes qui consistent à :
préparer le support (30),
appliquer la face inférieure (41) de la couche de matière (40) sur le contour de surface (31) du support (30), un adhésif étant appliqué sur la face inférieure (41) de la couche de matière (40) et/ou sur le contour de surface (31) du support (30),
chauffer l'adhésif dans une partie et
repousser la couche de matière (40) sur le support (30),
**caractérisé en ce que**
des nanotubes de carbone servant de dispositifs de chauffage sont appliqués sur le contour intérieur d'un outil de plaquage qui, lorsque la couche de matière (40) est repoussée contre le support (30) entre en contact avec la face supérieure de la couche de matière et
**en ce que** le chauffage de l'adhésif activé thermiquement s'effectue dans la partie par application d'une tension sur les nanotubes de carbone, ce qui active l'adhésif.
